**Europäisches Patentamt**

**European Patent Office**

**Office européen des brevets**

(19)

(11) Veröffentlichungsnummer : **0 331 272 B1**

(12)

# EUROPÄISCHE PATENTSCHRIFT

(45) Veröffentlichungstag der Patentschrift :
**13.05.92 Patentblatt 92/20**

(51) Int. Cl.$^5$ : **G01N 21/89**

(21) Anmeldenummer : **89200572.9**

(22) Anmeldetag : **28.02.89**

(54) **Verfahren und Vorrichtung zum Prüfen von transparenten Bahnen.**

Verbunden mit 89902775.9/0402380 (europäische Anmeldenummer/Veröffentlichungsnummer) durch Entscheidung vom 26.07.91.

(30) Priorität : **29.02.88 DE 3806385**

(43) Veröffentlichungstag der Anmeldung :
**06.09.89 Patentblatt 89/36**

(45) Bekanntmachung des Hinweises auf die Patenterteilung :
**13.05.92 Patentblatt 92/20**

(84) Benannte Vertragsstaaten :
**AT BE CH DE ES FR GB GR IT LI LU NL SE**

(56) Entgegenhaltungen :
**EP-A- 0 088 243**
**US-A- 4 455 086**
**US-A- 4 634 281**

(73) Patentinhaber : **Stora Feldmühle Aktiengesellschaft**
**Feldmühleplatz 1**
**W-4000 Düsseldorf 11 (DE)**

(72) Erfinder : **Schmiedl, Roland, Dr.,Dipl.-Phys.**
**Hollensiek 63**
**W-4800 Bielefeld 1 (DE)**

## Beschreibung

Die Erfindung betrifft ein Verfahren zum prüfen von transparenten Bahnen auf das Vorhandensein von Fehlern, insbesondere auf eingeschlossene Kernblasen, bei dem die zu prüfende transparente Bahn mit einem fliegenden Lichtpunkt abgetastet, das durch die Bahn hindurchtretende Licht auf transparente und opake Bereiche eines Empfängersystems geleitet wird und der in dem Empfänger angeordnete fotoelektrische Wandler, dem ein Diffusor vorgeschaltet ist, entsprechend der auf das Empfängersystem auftreffenden Lichtintensität Impulse an einen Rechner weiterleitet und eine Vorrichtung gemäß dem Oberbegriff des Anspruchs 1.

Unter transparenten Bahnen im Sinne der vorliegenden Erfindung werden kontinuierlich erzeugte Bahnen aus transparenten Kunststoffen oder aus Glas verstanden. Da die Problematik der Kernblasenbildung insbesondere bei Floatglaslinien auftritt, wird die Erfindung nachstehend anhand der Prüfung von Floatglasbahnen erläutert, ohne sie jedoch darauf zu beschränken.

Prüfvorrichtungen für Glasbahnen sind aus der DE-OS 31 29 808 und der DE-OS 32 23 215 bekannt. Beiden Schriften ist gemeinsam, daß die zu prüfende Materialbahn mit einem fliegenden Lichtpunkt abgetastet wird und daß durch eine Kernblase in das Glas abgeleitetes Licht randseitig an der Materialbahn erfaßt und ausgewertet wird. Liegt die Kernblase in der Mitte der zu prüfenden Materialbahn, so ist der Weg des Lichtes durch das Glas sehr lang, es ergibt sich also eine hohe Absorption, die besonders bei der Prüfung von leicht eingefärbtem Glas so hoch sein kann, daß keine auswertbaren Lichtsignale am Bahnrand mehr empfangen werden können. Ein weiterer Nachteil der bekannten Vorrichtungen ist darin zu sehen, daß der Empfänger am Rand der Materialbahn relativ gut gegen Fremdlichteinfall abgedichtet sein muß, um die geringen ankommenden Lichtintensitäten des an den Kernblasen gestreuten, ankommenden Lichtes noch über fotoelektrische Wandler erfassen und umsetzen zu können. Dabei muß ferner beachtet werden, daß gerade im Randbereich Verformungen auftreten, die das Licht streuen, so daß zusätzliche Vorrichtungen zur Sammlung des Lichtes erforderlich sind. Desweiteren ist nachteilig, daß die Bahnbreite kontinuierlich überwacht werden muß, um Beschädigungen der seitlich angeordneten Empfangsgeräte zu vermeiden.

Aus der US-PS 4,634,281 ist eine Prüfvorrichtung für Glasbahnen bekannt, bei der die Strahlablenkung beim prüfen unterschiedlich dicker Glassorten automatisch durch Verstellen eines Umlenkspiegels korrigiert wird. Der durch das Glas durchtretende Prüfstrahl fällt, wenn das Glas fehlerfrei ist, auf den opaken Bereich einer Diffusorscheibe, ändert sich die Glasdicke, so wandert der Lichtstrahl bei der Abtastung zum rechten oder linken Rand des opaken Bereiches und trifft dort auf Fotoelmente, die den Befehl zum Nachstellen des Spiegels auslösen. Bei der Messung handelt es sich um eine Messung im nahen Dunkelfeld T/DA, die für die Fehlerfindung von Oberflächendeformationen eingesetzt wird. Ein Erkennen kleiner Kernblasen ist jedoch damit nicht möglich.

Aufgabe der vorliegenden Erfindung ist, die bekannten Vorrichtungen zu verbessern, so daß auch stärker eingefärbtes Glas und Glasbahnen großer Breiten einwandfrei auf Kernblasen überprüft werden können.

Gemäß der Erfindung wird diese Aufgabe beim eingangs dargelegten Verfahren dadurch gelöst, daß ein Sender zwei parallele Lichtstrahlen emittiert, deren Lichtpunkte so geführt werden, daß sie bei fehlerfreier Materialbahn abwechselnd auf die Bahn treffen und abwechselnd den opaken und den transparenten Bereich des Empfängersystems bestreichen, so daß abwechselnd in T/D und T/DA gemessen wird, daß der Bereichswechsel von T/D nach T/DA und zurück sowie die auf Fehlern beruhenden Lichtintensitätsschwankungen dem Rechner als Impulse zugeführt und daß die Impulse im Rechner getrennt nach den Bereichen des Empfängersystems ausgewertet werden.

Die Problematik bei der Glasbahnprüfung besteht darin, daß eine Vielzahl verschiedenartiger Fehler auftreten können, zusätzlich zu diesen Fehlersignalen aber auch gleichartige Signale auftreten, die auf Verschmutzungen der Oberflächen der Glasbahn zurückzuführen sind und so ebenfalls zu Fehlermeldungen, sogenannten Scheinfehlern führen. Entsprechend den unterschiedlichen Prüfarten wurden auch unterschiedliche Prüfmethoden entwickelt. Man unterscheidet dabei zwischen Messung in Reflexion und Transmission, die man jeweils weiter unterteilen kann in die sogenannte Spiegelreflexion, also die Prüfung im Hellfeld, hier als R/S-Messung bezeichnet, ferner die diffuse Reflexion, die Prüfung im Dunkelfeld also, mit R/DF bezeichnet sowie die direkte Transmission, ebenfalls eine Messung im Hellfeld, mit T/D bezeichnet, die direkte Transmission im nahen Dunkelfeld, mit T/DA bezeichnet und die diffuse Transmission im Dunkelfeld, mit T/DF bezeichnet.

Bei R/S wird also das direkt reflektierte Licht über einen fotoelektrischen Wandler erfaßt, wobei dann Lichtschwankungen auftreten, wenn aufgrund eines nicht reflektierenden Fehlers oder aufgrund von Schmutz nicht die volle Lichtmenge reflektiert wird. Bei R/DF ist der Empfänger so angeordnet, daß nur diffus reflektiertes Licht empfangen werden kann, wobei in beiden Fällen der Empfänger über der zu prüfenden Glasbahn angeordnet ist.

Bei den weiteren Prüfmöglichkeiten in Transmission ist der Empfänger unterhalb der zu prüfenden Glasbahn angeordnet. Bei Messung in direkter Transmission T/D tritt der Lichtstrahl, der die Glasbahn passiert hat, in einen lichtoffenen Spalt ein und wird durch Fehler aus diesem Spalt heraus abgelenkt - evtl. durch Schmutz abgedunkelt -. Die Ablenkung durch Fehler oder Abdunklung durch Schmutz führt dazu, daß der Lichtstrahl nicht mehr voll in den Empfänger eintritt bzw. die auftretende Lichtintensität reduziert wird und damit ein Impuls vom fotoelektrischen Wandler ausgelöst wird. Bei der Messung im nahen Dunkelfeld T/DA durchtritt der Lichtstrahl ebenfalls die zu prüfende Glasbahn, gelangt in fehlerfreiem Fall selbst aber nicht in den Empfänger, d. h. er wird durch eine auf der Empfängerscheibe aufgebrachte opake Schicht, den Stopper, abgeblockt. Erst bei Ablenkung durch einen Fehler kann der Lichtstrahl rechts oder links vom Stopper in den Empfänger eintreten und im fotoelektrischen Wandler ein Impulssignal generieren. Bei der Prüfung gemäß T/DF ist der oder sind die Empfänger außerhalb des direkten Strahldurchtritts angeordnet, so daß nur diffuses Licht in den bzw. die Empfänger fällt, wenn beim Abtasten der Lichtstrahl auf einen Fehler trifft.

Je nach dem gewählten Prüfverfahren machen sich die Außeneinflüsse mehr oder weniger störend bemerkbar. So macht sich die Ablagerung von Schmutz auf oder unter der zu prüfenden Glasbahn im Hellfeld stark bemerkbar, d. h. die Auswertung wird bei der Prüfung gemäß R/S und T/D stark beeinträchtigt, wohingegen sie bei der Prüfung in T/DA erheblich geringer ist.

Mit der Methode R/S ist daher eine Ermittlung von starken Deformationsfehlern in der Materialbahn und eine Identifizierung spiegelnder Fehler möglich, nicht jedoch die Erfassung von Fehlern kleiner Deformationen oder die Findung von Kernblasen.

Mit der Methode T/DA ist sowohl die Fehlerfindung für grobe als auch flächenmäßig kleine Oberflächendeformationen möglich, nicht jedoch das Erkennen von kleinen Kernblasen und das Identifizieren spiegelnder Fehler.

Ein weiterer Scheinfehler tritt durch das sogenannte Tafeln auf, womit die vertikale und tordierende Bewegung der laufenden Glasbahn bezeichnet wird. Hier wird die Prüfung in Spiegelreflexion, also R/S, stark beeinträchtigt.

Mit der Methode T/D ist das Erkennen grober Deformationsfehler und die Findung von Kernblasen möglich, nicht jedoch die Identifizierung von spiegelnden Fehlern. Der Nachweis von kleinen Fehlern mit Deformationen ist nicht ganz so empfindlich wie in T/DA. Damit bot der Stand der Technik nur die Möglichkeit, mehrere Prüfstationen hintereinander anzuordnen, um zu einer vollständigen Prüfung einer Glasbahn zu gelangen. Das bedeutete aber, daß drei aufwendige Aggregate hintereinander hätten montiert werden müssen, was wegen der beengten Platzverhältnisse in den Produktionslinien nicht möglich ist, desweiteren sprach natürlich auch der hohe finanzielle Aufwand dagegen.

Durch den erfindungsgemäßen Vorschlag ist es jetzt möglich, mit einer einzigen Prüfanlage auszukommen und alle auftretenden Fehler auszuwerten, ohne daß ein zusätzlicher Platzbedarf erforderlich ist und ohne daß wesentliche Mehrkosten auftreten.

Die Vorrichtung zum prüfen von transparenten Bahnen auf das Vorhandensein von Fehlern, insbesondere von Kernblasen, besteht im wesentlichen aus einem Sender zur Erzeugung eines Lichtstrahles, einer Traversiervorrichtung für den Lichtstrahl, einem Empfänger mit einer vorgeschalteten Diffusorscheibe für das von der zu prüfenden transparenten Materialbahn durchgelassene Licht sowie einem Rechner zur Auswertung der von dem Empfänger erhaltenen Impulse und ist dadurch gekennzeichnet, daß die dem Empfänger vorgeschaltete Diffusorscheibe transparente und opake Bereiche aufweist, daß die Traversiervorrichtung aus einem umlaufenden Spiegelpolygon besteht, das eine gerade Anzahl von Flächen aufweist, die zur Hälfte geschwärt sind sodaß bei Rotation des Spiegelpolygons auf eine geschwärzte Hälfte eine verspiegelte Hälfte der Flächen folgt, daß der Sender zwei Lichtstrahlen emittiert und daß beide Lichtstrahlen parallel zueinander verlaufen.

Bei der Prüfung werden also zwei Lichtstrahlen auf das Spiegelpolygon gerichtet und treffen auf eine Fläche auf, wobei allerdings nur ein Strahl auf eine Hälfte auftrifft, die verspiegelt ist, während der andere Strahl auf eine Hälfte auftrifft, die geschwärzt ist. Der Erfolg ist, daß nur ein Lichtstrahl über die Materialbahn geführt wird und der andere durch die geschwärzte Fläche verschluckt, damit nicht reflektiert wird. Mit der weiteren Drehung des Spiegelpolygons wechseln die Strahlen, die die Materialbahn abtasten, weil sie auf eine neue Fläche treffen, bei der die geschwärzte Hälfte mit der verspiegelten Hälfte vertauscht ist. Dieses Mal wird also der zweite Strahl über die zu prüfende Materialbahn geleitet, wo er allerdings in einer geringfügig anderen position, bezogen auf den Empfänger, ankommt, d. h., ist der erste Abtaststrahl so gelenkt worden, daß er nach seinem Durchtritt durch die zu prüfende Materialbahn auf den Stopper, also den geschwärzten Mittelstreifen des Empfängers fiel, so wird der zweite Strahl so geleitet, daß er in den Spalt, der zwischen Stopper und geschwärztem Randbereich verläuft, fällt. Im ersten Falle wird also mit T/DA, im zweiten Falle mit T/D gearbeitet.

Befindet sich in der zu prüfenden Materialbahn eine Blase, die zu keiner Verformung einer der beiden Oberflächen geführt hat, also eine sogenannte Kernblase, so wird diese, im Gegensatz zu Glasfehlern mit Oberflächendeformation, eine wesentlich geringere Ablenkung des Lichtstrahles aufgrund ihrer Symmetrie bewirken, d. h. die Blase wirkt als extrem kurz brennweitige Linse, die im Fernfeld - und das ist der Empfänger - lediglich noch als Schattenriß zu erkennen ist, den eigentlichen gradlinigen Strahlenverlauf des Lichtstrahles insgesamt beeinflußt sie aber nicht merklich, d. h., daß damit auch kein Licht in die transparenten Bereiche rechts und links neben dem Stopper dringt. Der nächste auf die Bahn geleitete Abtaststrahl arbeitet aber nach dem Meßsystem T/D. Bei dieser Anordnung ist der Auftreffbereich des abtastenden Lichtpunktes innerhalb eines schmalen Spaltbereiches transparent, rechts und links dagegen verhindert eine Abdeckung - Stopper bzw. Randbereichden Lichteintritt. Hier werden die Fehler also durch Änderung der empfangenen Lichtintensität nachgewiesen, d. h. Verminderung des einfallenden Lichtes. Die Abnahme der empfangenen Lichtintensität kann dabei herrühren von völliger oder teilweiser Ablenkung des Lichtstrahles aus dem lichtdurchlässigen Bereich heraus durch Glasfehler mit starker Oberflächendeformation, durch Abblockung des Lichtstrahles durch Kernblasen sowie durch opake Objekte im Lichtstrahlverlauf, wie Schmutz oder Zinnablagerungen, weswegen im allgemeinen zum Ausschluß dieser Scheinfehler das Glas zur Erzielung dieser Empfindlichkeiten vor der Fehlerfindung zu waschen ist.

Bei der Meßanordnung T/D ist das Untergrundsignal $I_o$ des Empfängers relativ groß wegen des dauernden Lichteinfalls. Daher müssen die Intensitätsänderungen $\Delta I$ entsprechend groß sein, um das Verhältnis $\Delta I$ zu $I_o$ noch nachweisen zu können und eine gute Auswertung zu ermöglichen.

Als Konsequenz ergibt sich daraus, daß die kleinsten nachweisbaren Glasfehler bei dieser Meßanordnung T/D doch etwas größer sein müssen als bei der Meßanordnung T/DA, die für Glasfehler mit Oberflächendeformation sehr empfindlich sind.

Bei der Anordnung T/DA ist das Untergrundsignal sehr klein, da im allgemeinen kein Lichteinfall vorhanden ist und nur, wenn Teile des Lichtstrahles durch einen Fehler in die transparenten Bereiche des Diffusors links und rechts der ausgeblendeten Mittenabdeckung, also des Stoppers, gelenkt werden, Licht auf die fotoelektrischen Wandler fällt und ein Impuls ausgelöst wird. Da bei fehlerfreier Materialbahn praktisch kein Licht in den Empfänger gelangt, ist das Untergrundsignal $I_o$ extrem klein. Damit können schon sehr kleine Lichtmengen $\Delta I$ nachgewiesen werden, da der Quotient $\Delta I$ durch $I_o$ zwangsläufig groß wird.

Die beiden Meßanordnungen sind damit gegeneinander im gleichen Rechner auswertbar, wodurch der einzelne Fehler optimal erfaßt und ausgewertet werden kann. Die Auswertung ist dadurch möglich, daß, solange ein Scan definiert auf dem Stopper entlangläuft, das Empfangssystem in der T/DA-Anordnung arbeitet, wobei Licht durch Glasfehler vom undurchlässigen in den durchlässigen, also den Streubereich, gebracht wird. Solange ein Scan definiert auf einen der beiden durchlässigen transparenten Bereiche, also den Spalten verläuft, arbeitet das Empfangssystem in der T/D-Anordnung. Licht durch Glasfehler, aus dem durchlässigen Streubereich des Spaltes abgelenkt, fallen auf den Stopper bzw. die Randstreifen oder werden durch die Fehler selbst absorbiert.

Der Sender, der zur Abtastung eingesetzt wird, kann aus zwei Strahlern, beispielsweise Laserstrahlern, bestehen. Gemäß einer bevorzugten Ausgestaltung der Erfindung wird jedoch nur ein, ggf. stärkerer, Laserstrahler eingesetzt, dem ein Strahlteiler nachgeschaltet ist. Als Strahlteiler kann z. B. ein semitransparenter Spiegel eingesetzt werden.

Die Diffusorscheibe ist zweckmäßig mit einem über die gesamte Länge verlaufenden opaken und je einem sich rechts und/oder links daneben erstreckenden transparenten Bereich versehen.

Die Erfindung wird nachstehend anhand der Zeichnungen erläutert.

Fig. 1 zeigt in perspektivischer Darstellung eine Prüfvorrichtung für transparente Güter,

Fig. 2 als Seitenansicht im Schnitt den Sender und Empfänger der Prüfvorrichtung,

Fig. 3a bis 3c zeigen schematisch die Strahlengänge bei typischen Glasfehlern, nämlich:

a) eine kleine Deformation an der Oberfläche,

b) eine Kernblase,

c) eine Verschmutzung auf der Oberfläche,

Fig. 4 den Diffusor für transmittiertes Licht,

Fig. 5 das umlaufende Spiegelrad nebst einem schematisch angeordneten Strahlenteiler.

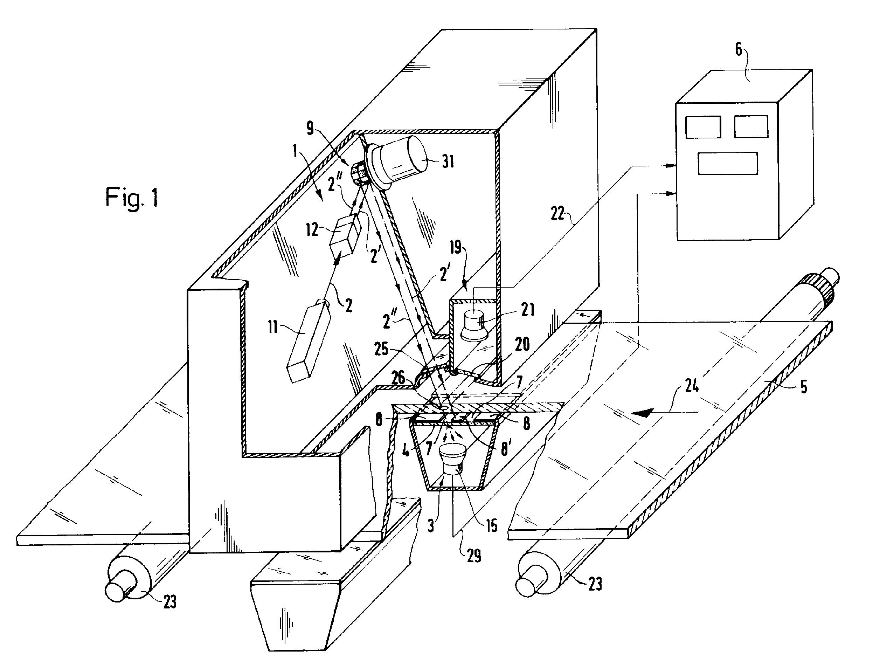

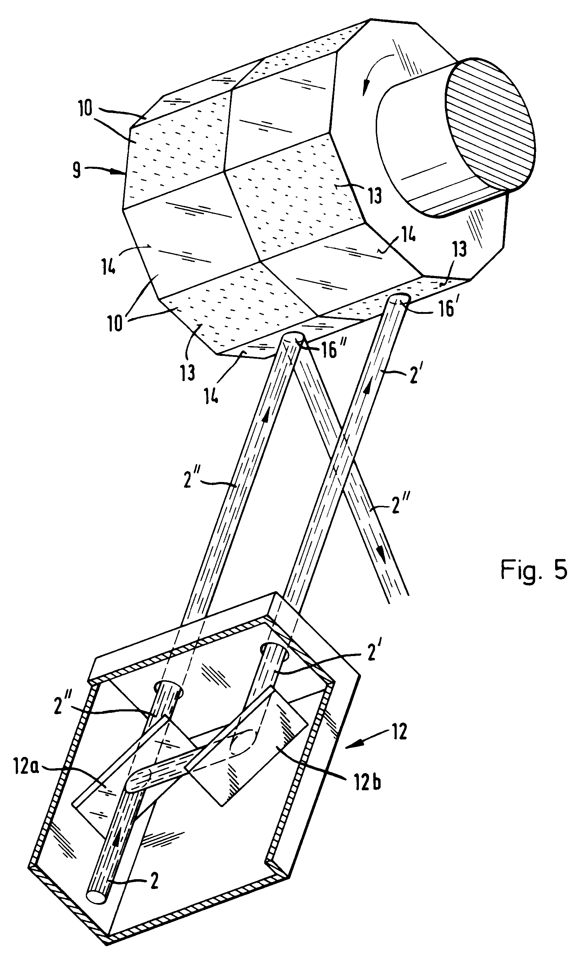

Der Sender 1 besteht aus dem Laserstrahler 11, dem ein Strahlenteiler 12 nachgeschaltet ist, der den Lichtstrahl 2 in Teilstrahlen 2′ und 2″ aufteilt. Der Strahlenteiler 12 besteht aus einem semitransparenten Spiegel 12a, dem ein zweiter Spiegel 12b zugeordnet ist, durch der der abgeteilte Teilstrahl 2′ parallel zum Teilstrahl 2″ ausgerichtet und auf das Spiegelpolygon (9) geworfen wird. Diese Teilstrahlen 2′ und 2″ sind auf die Flächen 10 des Spiegelpolygons 9 gerichtet und erzeugen hier den Lichtpunkt 16′ bzw. 16″. Der Teilstrahl 2′ fällt dabei auf die geschwärzte Hälfte 13 einer Fläche 10 und bildet hier den Lichtpunkt 16′, der Teilstrahl 2″ fällt auf die verspiegelte Hälfte 14 der Fläche 10 und bildet hier den Lichtpunkt 16″. Während der Lichtpunkt 16′ von der geschwärzten Hälfte 13 absorbiert wird, wird der Lichtpunkt 16″ reflektiert, wandert durch die Drehung des Spiegelpolygons 9 und dient zur Messung in direkter Transmission T/D, (Figuren 1 ; 5). Er bestreicht dabei die volle Breite der Materialbahn unter Bildung einer Abtastlinie 27″.

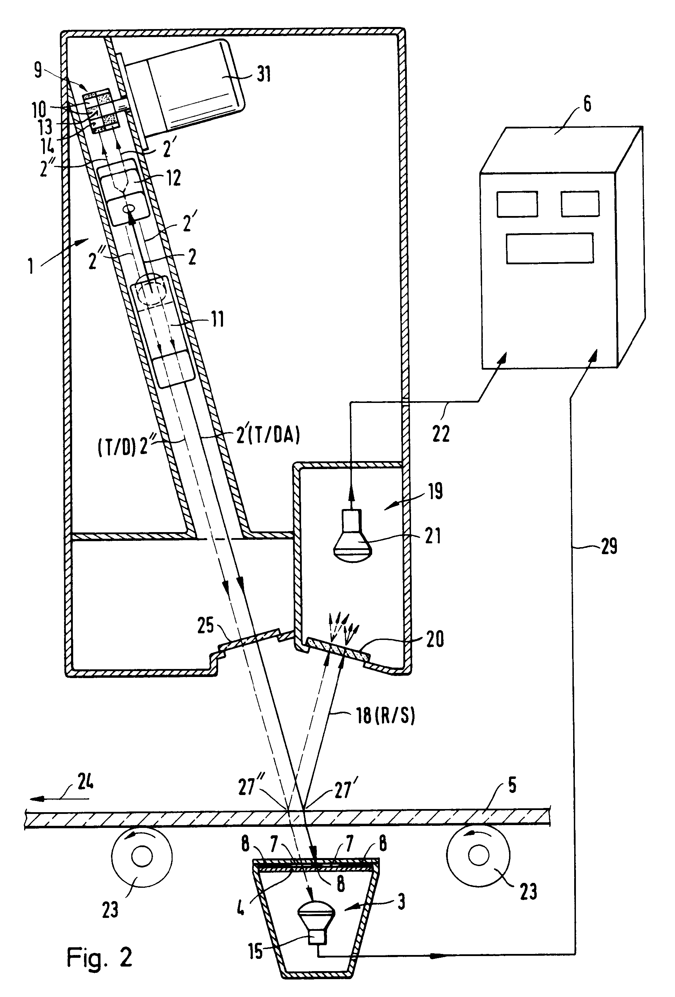

Nach weiterer Drehung des Spiegelpolygons 9 durch seinen Antriebsmotor 31 um einen durch die Facettenzahl festgelegten Winkel fällt der Teilstrahl 2′ auf die verspiegelte Hälfte 14 der Fläche 10 und der Teilstrahl 2″ auf die geschwärzte Hälfte 13 der Fläche 10, (Figur 2). Damit erfolgt eine Abtastung der Materialbahn 5 parallel zu der eben erfolgten, versetzt um den Abstand der Teilstrahlen 2′, 2″ zueinander, wobei diese Abtastlinie 27′ aber oberhalb des Stoppers 8′ verläuft, der Teilstrahl 2′ also auf den opaken Bereich 8′ der Diffusorscheibe 4 fällt, wenn kein Fehler in der Materialbahn 5 vorhanden ist. Der Rechner 6 ist während dieses Abtastzyklus auf Messung in T/DA geschaltet - beim vorhergehenden Abtastzyklus war er auf Messung in T/D geschaltet -und erhält nur dann einen Impuls, wenn in dem Empfänger 3 Licht, das durch einen Fehler in der Materialbahn 5 abgelenkt wurde, eintritt. Dieses Alternieren der Messung in T/D und T/DA erfolgt definiert im dauernden Wechsel entsprechend der Drehzahl und der Zahl der Facetten des Spiegelpolygons 9.

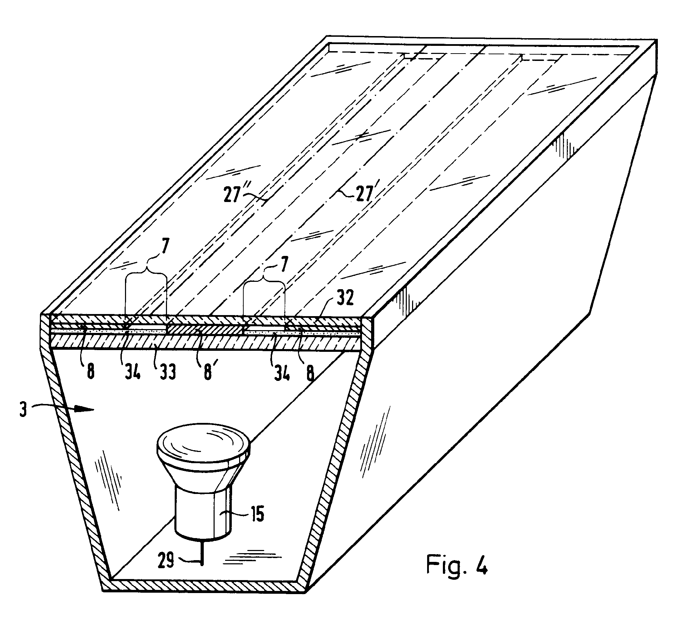

Figur 4 zeigt den Aufbau des Empfängers 3, der in einem Gehäuse die fotoelektrischen Wandler 15 enthält. Das Gehäuse ist durch eine Trägerscheibe 33 abgedeckt, auf der eine Diffusorscheibe 34 ruht, die von einem opaken Rand 8 überlagert und von einem mittig angeordneten Stopper 8′ getrennt wird. Der Stopper 8′ besteht ebenfalls aus opakem Material. Durch diese Anordnung ergibt sich rechts und links vom Stopper 8′ ein transparenter Bereich 7, durch den die Teilstrahlen 2′ bzw. 2″ in den Empfänger 3 eintreten können. Zum weiteren Schutz des Empfängers 3 ist dieser mit einer Abdeckscheibe 32 abgedeckt.

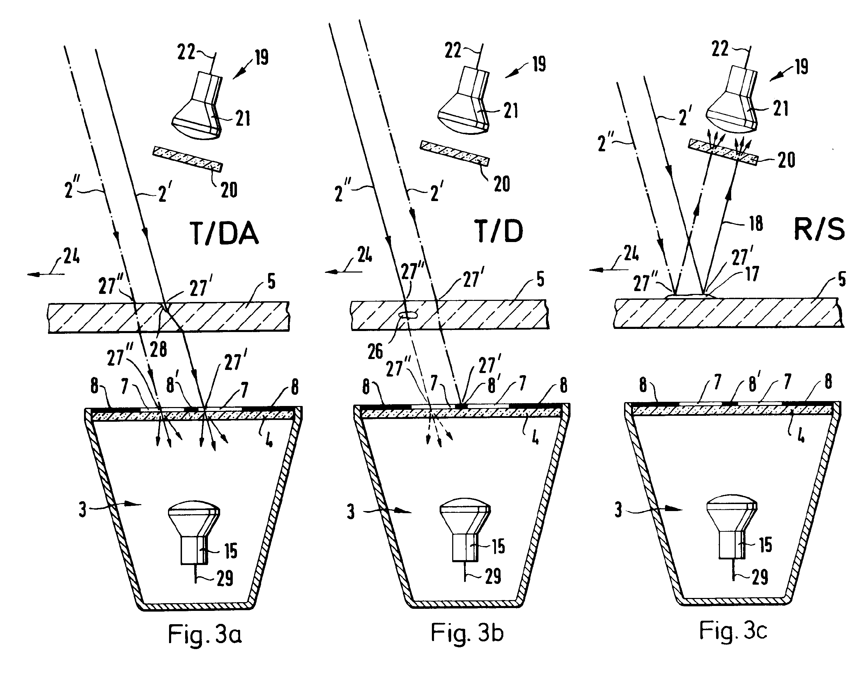

Die Figuren 1 und 2 zeigen eine Ausführungsform, bei der zusätzlich ein Spiegelreflexionsempfänger 19 oberhalb der Materialbahn 5 angeordnet ist. Der Spiegelreflexionsempfänger 19 befindet sich im gleichen Gehäuse wie der Sender 1, der seine Teilstrahlen 2′ und 2″ durch die Glasabdeckung 25 im unteren Bereich des Gehäuses auf die Materialbahn 5 sendet. Wird nur in Reflexionsmessung R/S gearbeitet, so wird nur einer der beiden Teilstrahlen, also entweder Teilstrahl 2′ oder Teilstrahl 2″ genutzt, während des Durchlaufs des anderen Teilstrahls erfolgt keine Auswertung des reflektierten Lichtsignales in Reflexion. Trifft der Teilstrahl 2′ auf den reflektierenden Fehler 17, (Figur 3c), so wird er von diesem als Reflexionsstrahl 18 auf die dem Spiegelreflexionsempfänger 19 vorgeschaltete Mattglasscheibe 20 geworfen, hinter der sich ein Fotomultiplier 21 befindet. Der Fotomultiplier 21 wandelt den erhaltenen Lichtwert in einen Impuls um und leitet ihn über die Impulsleitung 22 zum Rechner 6, (Figuren 1 und 2). Der dabei auftretende starke Helligkeitsunterschied unterscheidet sich deutlich von dem normalerweise von der Materialbahn 5 reflektierten Licht, d. h. die Lichtintensität ist wesentlich höher.

Der Strahlenverlauf bei unterschiedlichen Fehlern ist in den Figuren 3a bis 3c dargestellt. Bei 3a wird dabei in T/DA, bei 3b in T/D und bei 3c in R/S gearbeitet. In Figur 3a ist dabei eine Oberflächenverformung 28 dargestellt, durch die der Teilstrahl 2′ abgelenkt wird, so daß er nicht auf den Stopper 8′ auftrifft, sondern durch den transparenten Bereich 7 den fotoelektrischen Wandler 15 erreicht. Analog ist die Ablenkung des Teilstrahles 2″ in Figur 3b durch die Kernblase 26, wohingegen in Abbildung 3c durch den reflektierenden Fehler 17 sowohl der Teilstrahl 2′ als auch der Teilstrahl 2″ durch die Mattglasscheibe 20 auf den Fotomultiplier 21 geworfen wird.

In den Zeichnungen ist die Materialbahn 5 als Floatglasbahn dargestellt, die auf Rollen 23 geführt wird. Sie bewegt sich in Richtung des pfeiles 24, wodurch die Kernblase 26 in den Bereich der Abtastlinien 27′, 27″ gerät. Für eine Messung im nahen Dunkelfeld T/DA sind die lichtablenkenden Eisenschaften, insbesondere kleiner Kernblasen 26, sehr gering, so daß erst beim nächsten Abtastzyklus, also der Messung in T/D, durch ihre "Hinderniswirkung" im Lichtstrahl (Figur 3b) eine Intensitätsänderung ergibt, die durch den fotoelektrischen Wandler 15 im Empfänger 3 in einen Impuls umgesetzt und dann über die Signalleitung 29 dem Rechner 6 weitergeleitet wird.

## Patentansprüche

1. Verfahren zum Prüfen von transparenten Bahnen auf das Vorhandensein von Fehlern, insbesondere auf eingeschlossene Kernblasen, bei dem die zu prüfende transparente Bahn mit einem fliegenden Lichtpunkt abgetastet, das durch die Bahn hindurchtretende Licht auf transparente und opake Bereiche eines Empfängersystems geleitet wird und der in dem Empfänger angeordnete fotoelektrische Wandler, dem ein Diffusor vorgeschaltet ist, entsprechend der auf das Empfängersystem auftreffenden Lichtintensität Impulse an einen Rechner weiterleitet, dadurch gekennzeichnet, daß ein Sender zwei parallele Lichtstrahlen emittiert, deren Lichtpunkte so geführt werden, daß sie bei fehlerfreier Materialbahn abwechselnd auf die Bahn treffen und abwechselnd den opaken und den transparenten Bereich des Empfängersystems bestreichen, so daß abwechselnd in T/D und T/DA gemessen wird, daß der Bereichswechsel von T/D nach T/DA und zurück sowie die auf Fehlern beruhenden Lichtintensitätsschwankungen dem Rechner als Impulse zugeführt und daß die Impulse im Rechner getrennt nach den Bereichen des Empfängersystems ausgewertet werden.

2. Vorrichtung zur Durchführung des Verfahrens nach Anspruch 1, die im wesentlichen aus einem Sender (1) zur Erzeugung eines Lichtstrahles, einer Traversiervorrichtung (9) für den Lichtstrahl, einem Empfänger (3) mit einer vorgeschalteten Diffusorscheibe (4) für das von der zu prüfenden transparenten Materialbahn durchgelassene Licht sowie einem Rechner zur Auswertung der von dem Empfänger erhaltenen Impulse besteht, dadurch gekennzeichnet, daß die dem Empfänger (3) vorgeschaltete Diffusorscheibe (4) transparente (7) und opake (8, 8') Bereiche aufweist, daß die Traversiervorrichtung aus einem umlaufenden Spiegelpolygon (9) besteht, das eine gerade Anzahl von Flächen (10) aufweist, die zur Hälfte geschwärzt sind, sodaß bei Rotation des Spiegelpolygons (9) auf eine geschwärzte Hälfte (13) eine verspiegelte Hälfte (14) der Flächen (10) folgt, daß der Sender (1) zwei Lichtstrahlen (2', 2") emittiert und daß beide Lichtstrahlen (2', 2") parallel zueinander verlaufen.

3. Vorrichtung nach Anspruch 1, dadurch gekennzeichnet, daß das Spiegelpolygon (9) eine gerade Anzahl von Flächen (10) aufweist und bei Rotation des Spiegelpolygons (9) auf eine geschwärzte Hälfte (13) eine verspiegelte Hälfte (14) der Flächen (10) folgt.

4. Vorrichtung nach Anspruch 2 oder 3, dadurch gekennzeichnet, daß der Sender (1) ein Laserstrahler (11) mit nachgeschaltetem Strahlteiler (12) ist.

5. Vorrichtung nach einem der Ansprüche 2 bis 4, dadurch gekennzeichnet, daß die Diffusorscheibe (4) mit einem über die gesamte Länge verlaufenden opaken (8') und mindestens einem sich rechts und/oder links daneben erstreckenden transparenten (7) Bereich versehen ist.


**Claims**

1. A process for examining transparent sheets for the presence of defects, especially for trapped core bubbles, in which the transparent sheet to be examined is scanned with a flying light spot, the light passing right through the sheet is directed onto transparent and opaque regions of a receiver system and the photoelectric transducer, which is located in the receiver and has a diffusor arranged in front of it, transmits pulses to a computer in accordance with the light intensity incident on the receiver system, characterized in that a transmitter emits two parallel light beams, the light spots of which are guided so that with a sheet of material having no defects they fall alternately on the sheet and sweep the opaque and the transparent region of the receiver system alternately, so that measurement is alternately in T/D and T/DA, the region change-over from T/D to T/DA and back and also the light intensity fluctuations are supplied to the computer as pulses, and the pulses are evaluated in the computer separately according to the regions of the receiver system.

2. A device for implementing the process according to claim 1, which essentially comprises a transmitter (1) for producing a light beam, a traversing arrangement (9) for the light beam, a receiver (3) with a diffuser plate (4) arranged in front of it for the light allowed through by the transparent sheet of material to be examined, and also a computer for evaluating the pulses received by the receiver, characterized in that the diffuser plate (4) arranged in front of the receiver (3) has transparent (7) and opaque (8, 8') regions, that the traversing arrangement consists of a rotating reflecting polygon (9) which has an even number of faces (10), which are half-blackened, so that upon rotation of the reflecting polygon (9) a reflecting half (14) of the faces (10) follows a blackened half (13), that the transmitter (1) emits two light beams (2', 2") and that both light beams (2', 2") run parallel to one another.

3. A device according to claim 1, characterized in that the reflecting polygon (9) has an even number of faces (10) and on rotation of the reflecting polygon (9) a reflecting half face (14) of the faces (10) follows a blackened half (13).

4. A device according to claim 2 or 3, characterized in that the transmitter (1) is a laser emitter (11) with a beam splitter located downstream.

5. A device according to one of claims 2 to 4, characterized in that the diffuser plate (4) is provided with an opaque region (8') running for its entire length and with at least one transparent region (7) extending on the right and/or left side thereof.


**Revendications**

1. Procédé pour le contrôle de bandes transparentes afin de détecter la présence de défauts, notamment de bulles incluses, dans lequel la bande transparente à contrôler est palpée à l'aide d'un point lumineux flottant, la lumière traversant la bande est dirigée vers des zones transparentes et des zones opaques d'un système récepteur et le transducteur photo-électrique prévu dans le récepteur, devant lequel est placé un diffuseur, transmet à un calculateur des impulsions qui correspondent à l'intensité lumineuse frappant le système récepteur, caractérisé en ce qu'un émetteur émet deux rayons lumineux parallèles dont les points lumineux sont déplacés de manière telle que, dans le cas d'une bande sans défauts, ceux-ci frappent alternativement la bande de matériau et balaient alternativement la zone opaque et la zone transparente du système récepteur, de sorte que la mesure ait lieu alternativement en T/D et T/DA, en ce que le changement de zone de T/D vers T/DA et retour ainsi que les variations d'intensité lumineuse dues à des défauts sont envoyées sous forme d'impulsions au calculateur et en ce que les impulsions sont exploitées dans le calculateur - séparément conformément aux zones du système récepteur.

2. Dispositif pour la mise en oeuvre du procédé selon la revendication 1, qui se compose essentiellement d'un émetteur (1) pour la production d'un rayon lumineux, d'un dispositif de balayage (9) pour le rayon lumineux, d'un récepteur (3) avec un diffuseur (4) placé devant celui-ci pour la lumière transmise par la bande de matériau transparente ainsi que d'un calculateur pour l'exploitation des impulsions venant du récepteur, caractérisé en ce que le diffuseur (4) placé devant le récepteur (3) présente des zones transparentes (7) et des zones opaques (8, 8'), en ce le dispositif de balayage est formé d'un miroir polygonal (9) avec un nombre pair de surfaces (10), qui sont noircies pour moitié de manière telle que, lorsque le miroir polygonal (9) tourne, une moitié réfléchissante (14) succède à une moitié noircie (13) des surfaces (10), en ce que l'émetteur (1) émet deux rayons lumineux (2', 2'') et en ce que les deux rayons lumineux (2', 2'') sont parallèles entre eux.

3. Dispositif selon la revendication 1, caractérisé en ce que le miroir polygonal (9) présente un nombre pair de surfaces (10) et en ce que, lorsque le miroir polygonal (9) tourne, une moitié réfléchissante (14) succède à une moitié noircie (13) des surfaces (10).

4. Dispositif selon la revendication 2 ou 3, caractérisé en ce que l'émetteur (1) est une source laser (11) avec un diviseur de rayon placé à la suite celui-ci.

5. Dispsositif selon l'une des revendications 2 à 4, caractérisé en ce que le diffuseur (4) comporte une zone opaque (8') qui s'étend sur l'ensemble de sa longueur et au moins une zone transparente (7) qui s'étend à droite et/ou à gauche sur le côté de celle-ci.

Fig. 1

EP 0 331 272 B1

Fig. 2

T/DA

T/D

R/S

Fig. 3a

Fig. 3b

Fig. 3c

EP 0 331 272 B1

Fig. 4

Fig. 5